# EUROPEAN PATENT SPECIFICATION

(11) **EP 3 085 930 B1**
(45) Date of publication and mention of the grant of the patent: **26.09.2018**
(21) Application number: 16161685.9
(22) Date of filing: 22.03.2016
(51) Int. Cl.: F02D 41/00, F02M 26/06, F02M 26/10, F02D 41/14, F02D 41/24

(54) **EGR CONTROLLER FOR INTERNAL COMBUSTION ENGINE AND EGR CONTROL METHOD FOR INTERNAL COMBUSTION ENGINE**
AGR-STEUERUNG FÜR EINEN VERBRENNUNGSMOTOR UND VERFAHREN ZUR AGR-STEUERUNG EINES VERBRENNUNGSMOTORS
CONTRÔLEUR EGR POUR MOTEUR À COMBUSTION INTERNE ET PROCÉDÉ DE CONTRÔLE EGR ASSOCIÉ

(30) Priority: 23.04.2015 JP 2015088674
(43) Date of publication of application: 26.10.2016
(73) Proprietor: Bosch Corporation, Tokyo 150-8360 (JP)
(72) Inventor: MASUDA, Tomonori, Higashimatsuyama-shi, Saitama 355-8603 (JP); MAKINO, Hajime, Higashimatsuyama-shi, Saitama 355-8603 (JP)
(74) Representative: Bee, Joachim

(56) References cited:
- EP-A1- 1 982 063
- EP-A2- 1 870 584
- DE-A1- 19 934 508
- JP-A- 2006 132 429
- US-A1- 2013 304 355

## Description

### [Technical Field]

The invention relates to an EGR controller for an internal combustion engine and an EGR control method for an internal combustion engine, and, in particular, to an EGR controller for an internal combustion engine for controlling a low-pressure EGR device of the internal combustion engine that includes a turbocharger and an EGR control method for an internal combustion engine.

### [Background Art]

Conventionally, an exhaust gas recirculation (EGR) device that partially recirculates exhaust gas to a combustion chamber so as to reduce an amount of nitrogen oxide (NOx) contained in the exhaust gas of an internal combustion engine or to reduce pumping loss in an intake system has been known.

As the conventional EGR devices, for example, a low-pressure EGR device and a high-pressure EGR device, each of which is used in the internal combustion engine having a turbocharger, are known. The low-pressure EGR device is an EGR device that recirculates the exhaust gas between a downstream side of a turbine of the turbocharger in an exhaust passageway of the internal combustion engine and an upstream side of a compressor of the turbocharger in an intake passageway of the internal combustion engine. The high-pressure EGR device is an EGR device that circulates exhaust gas between an upstream side of the turbine in the exhaust passageway and a downstream side of the compressor in the intake passageway. The low-pressure EGR device and the high-pressure EGR device are selected and controlled in accordance with a speed and a load state of the internal combustion engine.

The low-pressure EGR device is provided at a position between the downstream side of the turbine and the upstream side of the compressor where differential pressure is low. Accordingly, in some of the conventional low-pressure EGR devices, in addition to an EGR valve disposed in an EGR passageway, an intake throttle valve for increasing the differential pressure is provided in the intake passageway so as to secure a sufficient flow rate of EGR gas. The intake throttle valve is provided on the upstream side of the compressor in the intake passageway (see PTL 1, for example).

### [Citation List]

### [Patent Literature]

[PTL 1] JP-A-2001-152879

### [Summary of Invention]

### [Technical Problem]

However, in the conventional low-pressure EGR device as described above and e.g. similarly disclosed in EP 1 870 584 A2 which relates to the preamble of claim 1 and claim 5, when the EGR valve and the intake throttle valve are concurrently adjusted to control the EGR gas flow rate, there is a case where adjustments of the EGR valve and the intake throttle valve interfere with each other, which leads to unstable control, and eventually leads to hunting of control. For this reason, for the stable EGR gas flow rate control, it is required to dull either control by the EGR valve or control by the intake throttle valve in the conventional low-pressure EGR device, which results in degraded responsiveness of the control.

Hereinafter, one example of the EGR gas flow rate control in the conventional low-pressure EGR device will be described. In the conventional low-pressure EGR device, a target value of the EGR gas flow rate (hereinafter also referred to as a target EGR gas flow rate) and a target value of differential pressure (hereinafter also referred to as EGR differential pressure) between the upstream side and the downstream side of the EGR valve (hereinafter also referred to as target EGR differential pressure) are set in accordance with an operation state of the internal combustion engine. More specifically, values of the EGR gas flow rate and the EGR differential pressure that correspond to each of the operation states of the internal combustion engine are set in advance by an experiment on the basis of the amount of NOx in the exhaust gas and the like. In the EGR gas flow rate control, the values of the EGR gas flow rate and the EGR differential pressure that correspond to the operation state of the internal combustion engine are selected from these. The speed and target torque (or an instructed injection amount) of the internal combustion engine are considered as the operation state of the internal combustion engine. In addition, the selected values are further corrected by various temperatures and pressure and are set as the target EGR gas flow rate and the target EGR differential pressure. Then, in accordance with these set target EGR gas flow rate and target EGR differential pressure, opening degrees (positions) of the EGR valve and the intake throttle valve are subjected to feedback control on the basis of measured values of the actual EGR gas flow rate and EGR differential pressure.

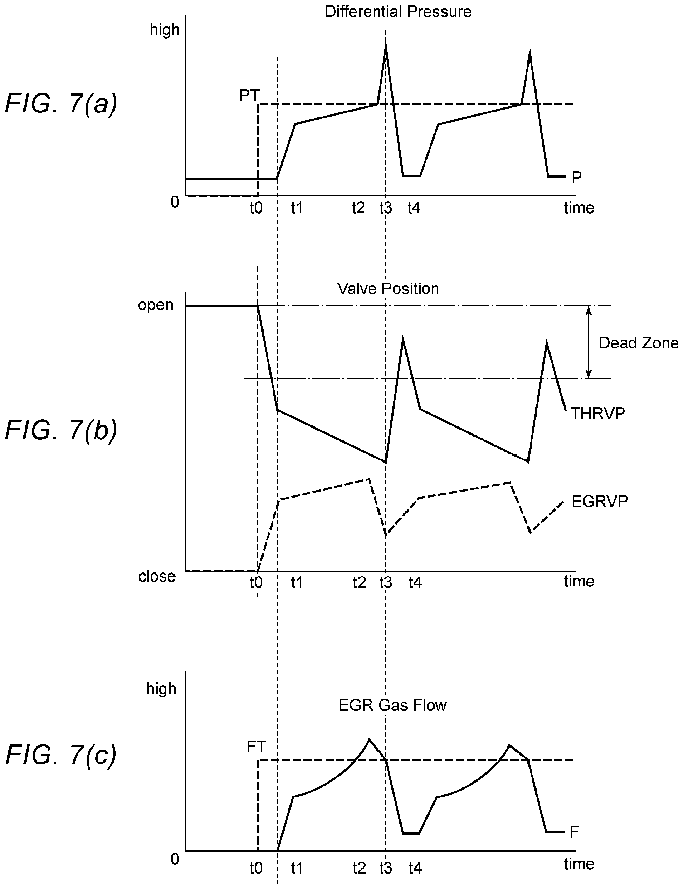

Figs. 7(a) to (c) are graphs for explaining one example of the EGR gas flow rate control in the conventional low-pressure EGR device. As depicted in Figs. 7(a) to (c), values of a target EGR gas flow rate FT and target EGR differential pressure PT are set at time t0 in accordance with the state of the internal combustion engine, the opening degree of the EGR valve (an EGR valve opening degree EGRVP) and the opening degree of the intake throttle valve (an intake throttle valve opening degree THRVP) are computed, and the EGR valve and the intake throttle valve are subjected to the feedback control. Until time t1, the EGR valve opening degree EGRVP is increased at a constant rate, and the intake throttle valve opening degree THRVP is reduced at a constant rate (see Fig. 7(b)). When the time t1 passes, an increase rate of the EGR valve opening degree EGRVP is reduced, and a reduction rate of the intake throttle valve opening degree THRVP is reduced (see Fig. 7(b)). At the time t1 onward, EGR differential pressure P and an EGR gas flow rate F are increased (see Figs. 7(a), (c)). Because an increase in the EGR differential pressure acts to increase the EGR gas flow rate, the EGR gas flow rate F is abruptly increased and exceeds the target EGR gas flow rate FT (see Fig. 7(c)). Once the EGR gas flow rate F exceeds the target EGR gas flow rate FT, the EGR valve is driven in a closing direction at time t2 (see Fig. 7(b)), and the EGR gas flow rate F is reduced. At time t3, the EGR gas flow rate F is reduced to the target EGR gas flow rate FT (see Fig. 7(c)), and the EGR valve is again driven in an opening direction (see Fig. 7(b)). Meanwhile, the EGR differential pressure P exceeds the target EGR differential pressure PT (see Fig. 7(a)), and the intake throttle valve is driven in an opening direction at the time t3 (see Fig. 7(b)). The EGR valve is driven in the opening direction, and the intake throttle valve is also driven in the opening direction. Both of the EGR gas flow rate F and the EGR differential pressure P are reduced, and the intake throttle valve is reversely driven in a closing direction at time t4 (see Fig. 7(b)). Thereafter, the EGR gas flow rate F and the EGR differential pressure P each repeat overshoot and undershoot from the target value in a similar manner, the hunting of the EGR gas flow rate control is repeated, and opening and closing operations of the EGR valve and opening and closing operations of the intake throttle valve are repeated. Such hunting of the EGR gas flow rate control possibly occurs in the case where a sensor output value that is used to set the target EGR gas flow rate FT and the target EGR differential pressure PT deviates from a nominal value.

For the above-described reason, it is desired in the control for the conventional low-pressure EGR device to maintain or improve the responsiveness of the EGR gas flow rate control while stably controlling the EGR gas flow rate.

The invention has been made in view of the above-described problem and therefore has as its object to provide an EGR controller for an internal combustion engine and an EGR control method for an internal combustion engine that can maintain or improve responsiveness of EGR gas flow rate control while stably controlling an EGR gas flow rate. This object is solved by an EGR controller according to claim 1 and by an EGR control method of claim 6. Further advantageous embodiments and improvements of the present invention are listed in the dependent claims. Hereinafter some aspects of the present invention are highlighted before coming to a detailed description of embodiments of the invention which include one or more of the below described aspects.

### [Solution to Problem]

In order to achieve the above purpose, an EGR controller for an internal combustion engine according to an aspect of the invention is an EGR controller for an internal combustion engine for controlling an EGR device provided in the internal combustion engine that includes at least one turbocharger, the EGR device having: an EGR passageway, one end of which is connected to a downstream side of a turbine of the turbocharger in an exhaust passageway, and the other end of which is connected to an upstream side of a compressor of the turbocharger in an intake passageway; an EGR valve that can change a flow area of the EGR passageway; and an intake throttle valve that is provided on the upstream side of the compressor in the intake passageway and can throttle the intake passageway. The EGR controller for the internal combustion engine includes: a target value setting section for setting a target value of differential pressure between an upstream side and a downstream side of the EGR valve and setting a target value of an EGR gas flow rate that is recirculated via the EGR passageway on the basis of an operation state of the internal combustion engine; an intake throttle valve opening degree computing section for computing an opening degree of the intake throttle valve in accordance with the target value of the differential pressure set by the target value setting section and a detected value of the differential pressure; an EGR valve opening degree computing section for computing an opening degree of the EGR valve in accordance with the target value of the EGR gas flow rate set by the target value setting section and a detected value of the EGR gas flow rate; and a filter processing section for executing filter processing by applying a filter to the opening degree of the intake throttle valve computed by the intake throttle valve opening degree computing section, in which the filter is a variable filter and is set in accordance with a difference between the opening degree of the intake throttle valve computed by the intake throttle valve opening degree computing section and the opening degree of the intake throttle valve subjected to the filter processing and the computed opening degree of the intake throttle valve, and in which, in the filter processing, the filter processing section extracts a filter that corresponds to the difference between the opening degree of the intake throttle valve computed by the intake throttle valve opening degree computing section and the opening degree of the intake throttle valve subjected to the filter processing and to the opening degree of the intake throttle valve computed by the intake throttle valve opening degree computing section, and maintains or corrects the opening degree of the intake throttle valve computed by the intake throttle valve opening degree computing section by applying the extracted filter thereto.

In the EGR controller for the internal combustion engine according to another aspect of the invention, the filter has time constants, each of which is set in accordance with the difference between the opening degree of the intake throttle valve computed by the intake throttle valve opening degree computing section and the opening degree of the intake throttle valve subjected to the filter processing and the opening degree of the intake throttle valve computed by the intake throttle valve opening degree computing section, and the filter processing section makes a correction to reduce the opening degree of the intake throttle valve computed by the intake throttle valve opening degree computing section in accordance with the time constant as the extracted filter.

In the EGR controller for the internal combustion engine according to the yet another aspect of the invention, the filter processing section maintains the opening degree of the intake throttle valve computed by the intake throttle valve opening degree computing section in a dead zone of the intake throttle valve.

In the EGR controller for the internal combustion engine according to the another aspect of the invention, the filter processing section maintains the opening degree of the intake throttle valve computed by the intake throttle valve opening degree computing section when the intake throttle valve is driven in an opening direction.

The EGR controller for the internal combustion engine according to the still another aspect of the invention further includes an EGR device drive instructing section for driving and controlling the EGR valve at the opening degree of the EGR valve computed by the EGR valve opening degree computing section and driving and controlling the intake throttle valve at the opening degree of the intake throttle valve subjected to the filter processing by the filter processing section.

In order to achieve the above purpose, an EGR control method for an internal combustion engine according to yet another aspect of the invention is an EGR control method for an internal combustion engine for controlling an EGR device provided in the internal combustion engine that includes at least one turbocharger, the EGR device having: an EGR passageway, one end of which is connected to a downstream side of a turbine of the turbocharger in an exhaust passageway, and the other end of which is connected to an upstream side of a compressor of the turbocharger in an intake passageway; an EGR valve that can change a flow area of the EGR passageway; and an intake throttle valve that is provided on the upstream side of the compressor in the intake passageway and can throttle the intake passageway. The EGR control method for the internal combustion engine includes: a target value setting step in which a target value of differential pressure between an upstream side and a downstream side of the EGR valve is set and a target value of an EGR gas flow rate that is recirculated via the EGR passageway is set on the basis of an operation state of the internal combustion engine; an intake throttle valve opening degree computing step in which an opening degree of the intake throttle valve is computed in accordance with the target value of the differential pressure set in the target value setting step and a detected value of the differential pressure; an EGR valve opening degree computing step in which an opening degree of the EGR valve is computed in accordance with the target value of the EGR gas flow rate set in the target value setting step and a detected value of the EGR gas flow rate; and a filter processing step in which filter processing is executed by applying a filter to the opening degree of the intake throttle valve computed in the intake throttle valve opening degree computing step, in which the filter is a variable filter and is set in accordance with a difference between the opening degree of the intake throttle valve computed in the intake throttle valve opening degree computing step and the opening degree of the intake throttle valve subjected to the filter processing and the computed opening degree of the intake throttle valve, and in which, in the filter processing step, a filter that corresponds to the difference between the opening degree of the intake throttle valve computed in the intake throttle valve opening degree computing step and the opening degree of the intake throttle valve subjected to the filter processing and to the opening degree of the intake throttle valve computed in the intake throttle valve opening degree computing step is extracted, and the opening degree of the intake throttle valve computed in the intake throttle valve opening degree computing step is maintained or corrected by applying the extracted filter thereto in the filter processing.

In the EGR control method for the internal combustion engine according to still another aspect of the invention, the filter has time constants, each of which is set in accordance with the difference between the opening degree of the intake throttle valve computed in the intake throttle valve opening degree computing step and the opening degree of the intake throttle valve subjected to the filter processing and the opening degree of the intake throttle valve computed in the intake throttle valve opening degree computing step, and, in the filter processing step, a correction is made to reduce the opening degree of the intake throttle valve computed in the intake throttle valve opening degree computing step in accordance with the time constant as the extracted filter.

In the EGR control method for the internal combustion engine according to the another aspect of the invention, in the filter processing step, the opening degree of the intake throttle valve computed in the intake throttle valve opening degree computing step is maintained in a dead zone of the intake throttle valve.

In the EGR control method for the internal combustion engine according to the another aspect of the invention, in the filter processing step, the opening degree of the intake throttle valve computed in the intake throttle valve opening degree computing step is maintained when the intake throttle valve is driven in an opening direction.

In the EGR control method for the internal combustion engine according to the yet another aspect of the invention further includes an EGR device drive instructing step in which the EGR valve is driven and controlled at the opening degree of the EGR valve computed in the EGR valve opening degree computing step and the intake throttle valve is driven and controlled at the opening degree of the intake throttle valve subjected to the filter processing in the filter processing step.

### [Advantageous Effects of Invention]

According to the EGR controller for the internal combustion engine and the EGR control method for the internal combustion engine according to the invention, responsiveness of EGR gas flow rate control can be maintained or improved while the EGR gas flow rate can stably be controlled.

### [Brief Description of Drawings]

Fig. 1 is a diagram for depicting a schematic configuration of an internal combustion engine to which an EGR controller for the internal combustion engine according to an embodiment of the invention is applied.
Fig. 2 is a block diagram that schematically depicts a functional configuration of the EGR controller for the internal combustion engine according to the embodiment of the invention.
Fig. 3 includes tables for explaining a configuration of a filter that is provided in the EGR controller for the internal combustion engine depicted in Fig. 2, in which Fig. 3(a) is a table for schematically depicting the configuration of the filter and Fig. 3(b) is a table for depicting one example of the configuration of the filter.
Fig. 4 is a block diagram for schematically depicting filter processing executed by a filter processing section depicted in Fig. 2.
Fig. 5 is a flowchart of an EGR control method for the internal combustion engine according to the embodiment of the invention that is executed by the EGR controller depicted in Fig. 1.
Fig. 6 includes graphs for exemplifying an operation of an EGR device in EGR control processing depicted in Fig. 5, in which Fig. 6 (a) is a graph that depicts statuses of target EGR differential pressure and actual EGR differential pressure, Fig. 6(b) is a graph that depicts statuses of opening degrees of an EGR valve and an intake throttle valve, and Fig. 6(c) is a graph that depicts statuses of a target EGR gas flow rate and an actual EGR gas flow rate.
Fig. 7 includes graphs for explaining one example of EGR gas flow rate control in a conventional low-pressure EGR device, in which Fig. 7(a) is a graph that depicts statuses of the target EGR differential pressure and the actual EGR differential pressure, Fig. 7(b) is a graph that depicts statuses of the opening degrees of the EGR valve and the intake throttle valve, and Fig. 7(c) is a graph that depicts statuses of the target EGR gas flow rate and the actual EGR gas flow rate.

### [Description of Embodiments]

A description will hereinafter be made on an embodiment of the invention with reference to the drawings.

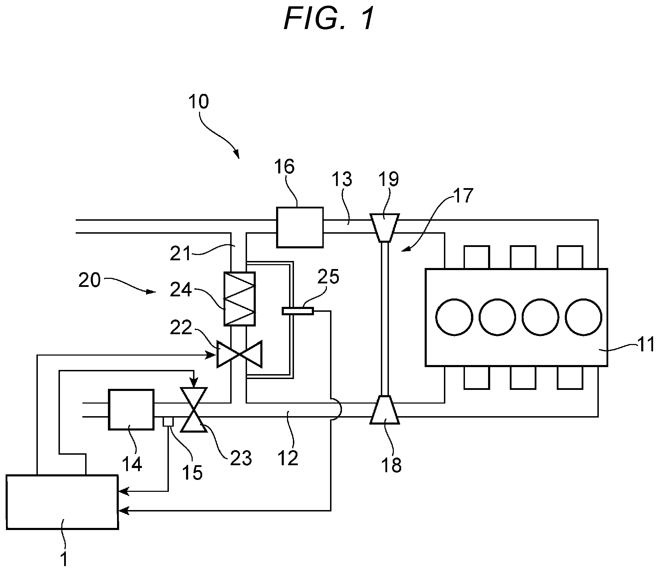

Fig. 1 is a diagram for depicting a schematic configuration of an internal combustion engine to which an EGR controller for the internal combustion engine according to the embodiment of the invention is applied. An EGR controller 1 for the internal combustion engine according to the embodiment of the invention is applied to an internal combustion engine of an automobile, and the internal combustion engine may be a diesel engine or a gasoline engine. In this embodiment, the internal combustion engine is the diesel engine.

As depicted in Fig. 1, an internal combustion engine 10 to which the EGR controller 1 as the EGR controller for the internal combustion engine according to the embodiment of the invention is applied includes: an internal combustion engine body 11 that has a crankshaft, a combustion chamber, and the like and outputs power; and an intake passageway 12 and an exhaust passageway 13 that are connected to the internal combustion engine body 11. In the internal combustion engine 10, the intake passageway 12 is provided with an air filter 14 and an intake air amount sensor 15 that can detect an intake air amount from an upstream side, and the exhaust passageway 13 is provided with an exhaust gas after-treatment device 16 such as a catalyst and a DPF. In addition, the internal combustion engine 10 includes a turbocharger 17 and an EGR device 20.

The EGR device 20 is a so-called low-pressure EGR device that partially recirculates exhaust gas of the internal combustion engine 10 as EGR gas at a position between a downstream side of a turbine 19 of the turbocharger 17 in the exhaust passageway 13 and an upstream side of a compressor 18 of the turbocharger 17 in the intake passageway 12. The EGR device 20 includes: an EGR passageway 21, one end of which is connected to the downstream side of the turbine 19 in the exhaust passageway 13, and, the other end of which is connected to the upstream side of the compressor 18 in the intake passageway 12; an EGR valve 22 that can change a flow area of the EGR passageway 21; and an intake throttle valve 23 that is provided on the upstream side of the compressor 18 in the intake passageway 12 and can throttle the intake passageway 12. In addition, the EGR passageway 21 in the EGR device 20 is provided with an EGR cooler 24 on an upstream side of the EGR valve 22 and a differential pressure sensor 25 that can detect differential pressure between the upstream side and a downstream side of the EGR valve 22 (hereinafter also referred to as EGR differential pressure).

The EGR valve 22 includes an undepicted drive means such as a motor or an actuator, and a valve opening degree thereof can be adjusted such that the flow area of the EGR passageway 21 becomes a desired flow area and that a flow rate becomes a desired flow rate. As will be described below, the valve opening degree of the EGR valve 22 is set in accordance with a control signal from the EGR controller 1, and an EGR gas flow rate is controlled. In addition, the intake throttle valve 23 includes an undepicted drive means such as a motor or an actuator, and a valve opening degree thereof can be adjusted such that a flow area of the intake passageway 12 is throttled to be a desired flow area so as to adjust the EGR differential pressure. As will be described below, the valve opening degree of the intake throttle valve 23 is set in accordance with a control signal from the EGR controller 1, and the EGR differential pressure is controlled. Noted that the valve opening degree corresponds to a flow region (an opened region) of the actual passageway.

Noted that, in the internal combustion engine 10, the turbocharger 17 may be a one-step turbocharger as depicted or a multi-step turbocharger that includes plural turbochargers. In addition, the internal combustion engine 10 may include, in addition to the EGR device 20 as the low-pressure EGR device, a so-called high-pressure EGR device that partially recirculates the exhaust gas of the internal combustion engine 10 as the EGR gas at a position between an upstream side of the turbine 19 in the exhaust passageway 13 and a downstream side of the compressor 18 in the intake passageway 12.

The EGR controller 1 can control the EGR valve 22 and the intake throttle valve 23 such that a flow rate of the EGR gas that is recirculated in accordance with a state of the internal combustion engine 10 (hereinafter also referred to as the EGR gas flow rate) becomes a desired flow rate. The EGR controller 1 is, for example, an electronic control unit (ECU) of the internal combustion engine 10 or included in the ECU. The EGR controller 1 is a microcomputer and includes a CPU, a RAM, a ROM, an input port, and an output port. In addition, the EGR controller 1 can receive detection information from an intake air amount sensor 15 and a differential pressure sensor 25 as well as information that corresponds to NOx content in the exhaust gas, in-cylinder pressure, and information indicative of the other states of the internal combustion engine 10.

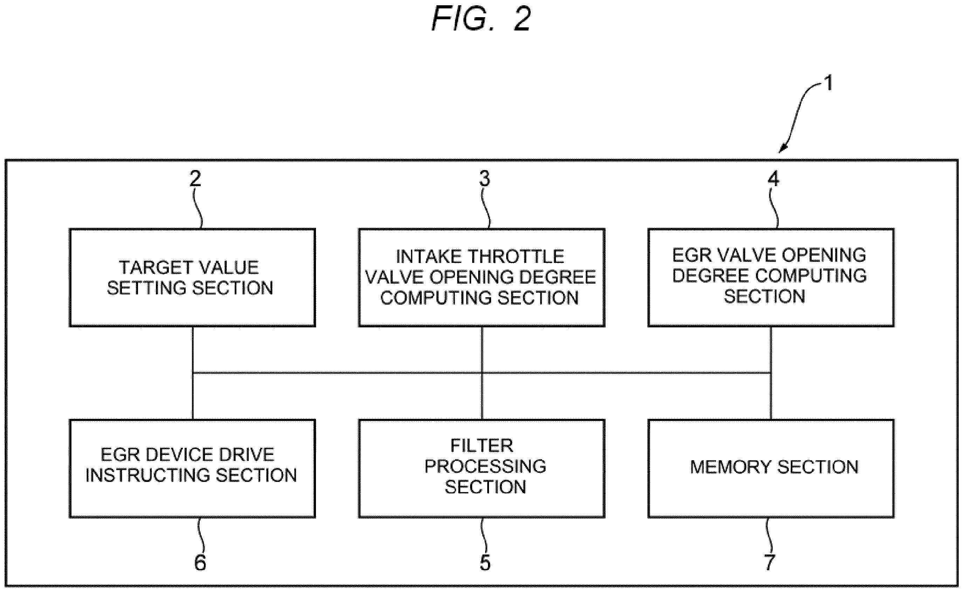

Fig. 2 is a block diagram that schematically depicts a functional configuration of the EGR controller 1. As depicted in Fig. 2, the EGR controller 1 includes a target value setting section 2, an intake throttle valve opening degree computing section 3, an EGR valve opening degree computing section 4, a filter processing section 5, an EGR device drive instructing section 6, and a memory section 7.

The target value setting section 2 sets a target value of the EGR differential pressure and sets a target value of the EGR gas flow rate on the basis of the state of the internal combustion engine, for example, the information on the operation states of the internal combustion engine 10 such as the speed, the target torque (or the instructed injection amount) as well as various temperatures and pressure such that the EGR gas flow rate becomes an optimum flow rate to suppress NOx. A value of the EGR differential pressure and a value of the EGR gas flow rate that correspond to each of the states (the speed and the target torque) of the internal combustion engine 10 are set in advance by an experiment and stored as a data table in the memory section 7. The target value setting section 2 refers to this data table, extracts the values of the EGR differential pressure and the EGR gas flow rate that correspond to detected values that indicate the states (the speed and the target torque) of the internal combustion engine and are received from the various sensors of the internal combustion engine 10, corrects the extracted values of the EGR differential pressure and the EGR gas flow rate based on the detected values of the various temperatures and pressure, and respectively set the corrected values as the target EGR differential pressure and the target EGR gas flow rate.

The intake throttle valve opening degree computing section 3 computes the opening degree of the intake throttle valve (hereinafter also referred to as a requested intake throttle valve opening degree) in accordance with the target EGR differential pressure set by the target value setting section 2 and the detected value by the differential pressure sensor 25 that corresponds to the actual EGR differential pressure so as to execute feedback control of the valve opening degree of the intake throttle valve 23. As it has conventionally been known, the requested intake throttle valve opening degree is computed by a model operation that is set in advance.

The EGR valve opening degree computing section 4 computes the opening degree of the EGR valve (hereinafter also referred to as a requested EGR valve opening degree) in accordance with the target EGR gas flow rate set by the target value setting section 2 and the detected value of the EGR gas flow rate that corresponds to the actual EGR flow rate so as to execute feedback control of the valve opening degree of the EGR valve 22. As it has conventionally been known, the requested EGR valve opening degree is computed by the model operation that is set in advance. The detected value of the EGR gas flow rate is derived by a conventionally known method. For example, the detected value of the EGR gas flow rate is derived by using a value detected by the intake air amount sensor 15. More specifically, the detected value of the EGR gas flow rate is computed by computing an entire intake flow rate that is supplied to the internal combustion engine body 11 from the speed of the internal combustion engine 10 and a supercharging rate of the turbocharger 17 and subtracting the intake air amount that is based on the value detected by the intake air amount sensor 15 from this computed value. Alternatively, the detected value of the EGR gas flow rate may be computed by disposing an intake pressure sensor on a downstream side of the intake throttle valve 23 in the intake passageway 12 and from a difference between a value detected by the intake pressure sensor and the value detected by the intake air amount sensor 15. Further alternatively, an EGR gas flow rate sensor may be disposed on the downstream side of the EGR valve 22 to directly detect the EGR gas flow rate.

The filter processing section 5 executes filter processing of the requested intake throttle valve opening degree that is computed by the intake throttle valve opening degree computing section 3 via a filter and computes an instructed intake throttle valve opening degree. In the filter processing, the requested intake throttle valve opening degree that is computed by the intake throttle valve opening degree computing section 3 is maintained or corrected via the filter. The filter is a variable filter, is set in advance on the basis of a difference between the requested intake throttle valve opening degree that is computed by the intake throttle valve opening degree computing section 3 and the instructed intake throttle valve opening degree that is computed in the last filter processing (hereinafter also referred to as an intake throttle valve opening degree deviation) and this requested intake throttle valve opening degree, and is stored as a data table in the memory section 7.

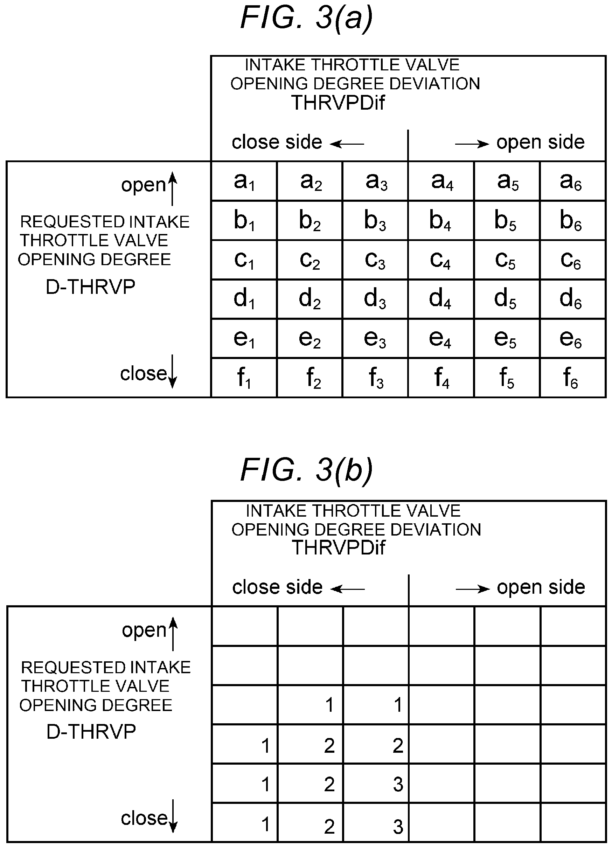

More specifically, the filter has time constants, each of which is set in accordance with the intake throttle valve opening degree deviation and the requested intake throttle valve opening degree. Fig. 3 includes tables for explaining a configuration of the filter, in which Fig. 3 (a) is a table for schematically depicting the configuration of the filter and Fig. 3 (b) is a table for depicting one example of the configuration of the filter. As depicted in Fig. 3, each of the filters is set in accordance with the intake throttle valve opening degree deviation and the requested intake throttle valve opening degree and forms the data table.

As depicted in Fig. 3(a), in the data table, the intake throttle valve opening degree deviation in an opening direction of the intake throttle valve 23 is divided by each specified range. In addition, the intake throttle valve opening degree deviation in a closing direction of the intake throttle valve 23 is divided into specified ranges. The number of division of the intake throttle valve opening degree deviation in the opening direction of the intake throttle valve 23 is the same as the number of division of the intake throttle valve opening degree deviation in the closing direction of the intake throttle valve 23. In this embodiment, the intake throttle valve opening degree deviation in the opening direction of the intake throttle valve 23 is divided into three ranges (a₄ to a₆, ... f₄ to f₆). Similarly, the intake throttle valve opening degree deviation in the closing direction of the intake throttle valve 23 is divided into three ranges (a₁ to a₃, ... f₁ to f₃). A range a1 to f₁ is a range where the intake throttle valve 23 is abruptly driven in the closing direction, and a range a₃ to f₃ is a range where the intake throttle valve 23 is moderately driven in the closing direction. A range a₂ to f₂ is an intermediate range therebetween. Meanwhile, a range a₆ to f₆ is a range where the intake throttle valve 23 is abruptly driven in the opening direction, and a range a₄ to f₄ is a range where the intake throttle valve 23 is moderately driven in the opening direction. A range a₅ to f₅ is an intermediate range therebetween.

In addition, as depicted in Fig. 3(a), in the data table, the requested intake throttle valve opening degree is divided by each specified range from full opening to full closing. In this embodiment, the requested intake throttle valve opening degree is divided into six ranges (a₁ to a₆, ..., f₁ to f₆). A range a₁ to a₆ is a range that includes a maximum opening degree (the full opening) of the requested intake throttle valve and the opening degrees in a specified range from the maximum. A range f₁ to f₆ is a range that includes a minimum opening degree (the full closing) of the requested intake throttle valve and the opening degrees in a specified range from the minimum.

In the data table, the filter is set for each of combinations of the divided requested intake throttle valve opening degree deviations and the divided requested intake throttle valve opening degrees. That is, one filter is set for each combination of the intake throttle valve opening degree deviation and the requested intake throttle valve opening degree. Each of the filters represents the time constant. Noted that a method for setting the filters is not limited to what is described above. A method for dividing the intake throttle valve opening degree deviation and a method for dividing the requested intake throttle valve opening degree are not limited to the above-described methods for dividing.

The filter processing section 5 extracts the filter that corresponds to the intake throttle valve opening degree deviation and the requested intake throttle valve opening degree from the data table and maintains or corrects the requested intake throttle valve opening degree that is computed via this extracted filter.

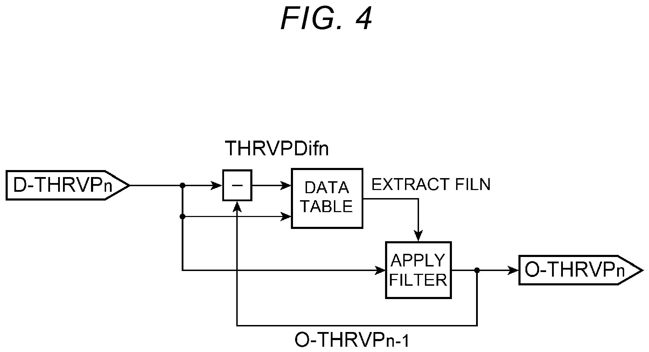

Hereinafter, the filter processing by the filter processing section 5 will be described. Fig. 4 is a block diagram for schematically depicting the filter processing executed by the filter processing section 5. As depicted in Fig. 4, the filter processing section 5 computes an intake throttle valve opening degree deviation THRVPDifn ("D-THRVPn" - "O-THRVPn-1") that is a difference between a requested intake throttle valve opening degree D-THRVPn computed this time (an n time) in the intake throttle valve opening degree computing section 3 and an instructed intake throttle valve opening degree O-THRVPn-1 computed in the last filter processing (an n-1 time). The intake throttle valve opening degree deviation THRVPDifn corresponds to a change amount of the intake throttle valve opening degree that is requested in opening degree control of the intake throttle valve 23 this time. Then, the above data table is referred to extract a filter Filn that corresponds to the intake throttle valve opening degree deviation THRVPDifn and the requested intake throttle valve opening degree D-THRVPn that are computed this time. This extracted filter Filn is applied to the requested intake throttle valve opening degree D-THRVPn, the requested intake throttle valve opening degree D-THRVPn is maintained or corrected in accordance with the filter Filn, and an instructed intake throttle valve opening degree O-THRVPn of this time is computed. Then, this computed instructed intake throttle valve opening degree O-THRVPn is transmitted to the EGR device drive instructing section 6 and is also transmitted to and stored in the memory section 7, and the filter processing is terminated.

In application of a filter Fil to an requested intake throttle valve opening degree D-THRVP, for example, correction coefficient α that corresponds to the time constant provided in the filter Fil is computed or detected, and the requested intake throttle valve opening degree D-THRVP is multiplied by this correction coefficient α. In this way, the requested intake throttle valve opening degree D-THRVP is corrected and is reduced in accordance with the time constant (the correction coefficient α), and an instructed intake throttle valve opening O-THRVP that becomes smaller than the requested intake throttle valve opening degree D-THRVP is computed. When the filter Fil does not have the time constant, the requested intake throttle valve opening degree D-THRVP is not corrected but maintained, and the requested intake throttle valve opening degree D-THRVP becomes the instructed intake throttle valve opening degree O-THRVP. In the case where the instructed intake throttle valve opening degree O-THRVP is the requested intake throttle valve opening degree D-THRVPn that is corrected (reduced), drive control of the intake throttle valve 23 is delayed (dulled). On the other hand, in the case where the instructed intake throttle valve opening degree O-THRVP is the requested intake throttle valve opening degree D-THRVPn that is maintained, the drive control of the intake throttle valve 23 is not delayed (dulled).

The EGR device drive instructing section 6 receives a requested EGR valve opening degree D-EGRVP that is computed in the EGR valve opening degree computing section 4 and the instructed intake throttle valve opening degree O-THRVP that is computed in the filter processing section 5, executes drive control such that the EGR valve 22 has the requested EGR valve opening degree D-EGRVP, and executes the drive control such that the intake throttle valve 23 has the instructed intake throttle valve opening degree O-THRVP. In addition, the EGR device drive instructing section 6 outputs the requested EGR valve opening degree D-EGRVP to a drive section of the EGR valve 22 and outputs the instructed intake throttle valve opening O-THRVP to a drive section of the intake throttle valve 23. In this way, the EGR valve 22 is driven such that the opening degree thereof becomes the requested EGR valve opening degree D-EGRVP, and the intake throttle valve 23 is driven such that the opening degree thereof becomes the instructed intake throttle valve opening O-THRVP.

According to the above-described filter processing, reaction of the intake throttle valve 23 can be made dull or quick in accordance with a state of the intake throttle valve 23 by setting the filter in accordance with the target opening degree of the intake throttle valve 23. Accordingly, in the case where the intake throttle valve 23 is controlled at an opening degree that is highly sensitive to the EGR gas flow rate, the reaction of the intake throttle valve 23 can be made dull by increasing the filter, so as to be able to stabilize EGR gas flow rate control. On the other hand, in the case where the intake throttle valve 23 is controlled at an opening degree that is insensitive to the EGR gas flow rate, the reaction of the intake throttle valve 23 can be made quick by reducing the filter, so as to be able to increase responsiveness of the EGR gas flow rate control.

In addition, the reaction of the intake throttle valve 23 can be made dull or quick in accordance with a drive state of the intake throttle valve 23 by setting the filter in accordance with a change rate of the target opening degree of the intake throttle valve 23. Accordingly, in the case where the target opening degree is significantly changed, the reaction of the intake throttle valve 23 can be made quick by reducing the filter, so as to be able to increase the responsiveness of the EGR gas flow rate control. On the other hand, in the case where the target opening degree is slightly changed, the reaction of the intake throttle valve 23 can be made dull by increasing the filter, so as to be able to stabilize the EGR gas flow rate control.

For example, in the case where the filters are set to constitute the data table as depicted in Fig. 3(b), the responsiveness of the EGR gas flow rate control can be maintained or improved while the EGR gas flow rate is stably controlled. In Fig. 3(b), filters 1, 2, 3 each correspond to the time constant. For example, 1, 2, and 3 respectively correspond to 10 msec, 100 msec, and 200 msec. Various signs and various methods can be applied to setting signs and a setting method for the filter.

More specifically, in this data table, as depicted in Fig. 3(b), the filter (the time constant) is not set in the ranges of the opening degree (a₁ to a₆, b₁ to b₆) in a dead zone where the EGR differential pressure is not influenced even when the intake throttle valve 23 is opened. In this way, when the opening degree of the intake throttle valve 23 is in a region of the dead zone, the filter cannot be applied, and the filter processing section 5 does not correct the requested intake throttle valve opening degree D-THRVP. Accordingly, the intake throttle valve 23 can promptly leave the dead zone, and the EGR differential pressure can promptly be increased.

In addition, a small filter (1) is set in the ranges (d₁, e₁, f₁) where the target opening degree of the intake throttle valve 23 is significantly changed in the closing direction. In this way, when a request is made to drive the intake throttle valve 23 significantly, the reaction of the intake throttle valve 23 is not made dull, and the responsiveness of the EGR gas flow rate control is not degraded. On the other hand, a large filter (3) is set in the ranges (e₃, f₃) where the target opening degree of the intake throttle valve 23 is slightly changed in the region where sensitivity to the EGR gas flow rate is high. In this way, when a request is made to drive the intake throttle valve 23 slightly in the region where the sensitivity to the EGR gas flow rate is high, the reaction of the intake throttle valve 23 is made dull, and interference between the EGR valve 22 and the intake throttle valve 23 that is caused by concurrent operations thereof can be suppressed. Thus, the EGR gas flow rate control can be stabilized.

Furthermore, as depicted in Fig. 3(b), in this data table, the filter (the time constant) is not set in the ranges (a₄ to f₄, a₅ to f₅, a₆ to f₆) where the intake throttle valve 23 is driven in the opening direction. Accordingly, when a driver depresses an accelerator pedal significantly, the filter processing section 5 does not correct the requested intake throttle valve opening degree D-THRVP, and a rapid increase of the intake air amount that is supplied to the internal combustion engine body 11 is not prevented. Thus, there is no adverse influence on drivability.

Moreover, when the requested intake throttle valve opening degree D-THRVP and the intake throttle valve opening degree deviation THRVPDif are shifted from one combination to another combination among the combinations of the divided ranges of the requested intake throttle valve opening degree D-THRVP and the divided ranges of the intake throttle valve opening degree deviation THRVPDif in the data tables depicted in Fig. 3(a), (b), a compensating calculation is performed for the instructed intake throttle valve opening degree O-THRVP. In this way, between two each of the combinations depicted in Figs. 3(a), (b), that is, between two each of the filters, the instructed intake throttle valve opening degree O-THRVPn that is computed this time and the instructed intake throttle valve opening degree O-THRVPn-1 that is computed last time are smoothly linked.

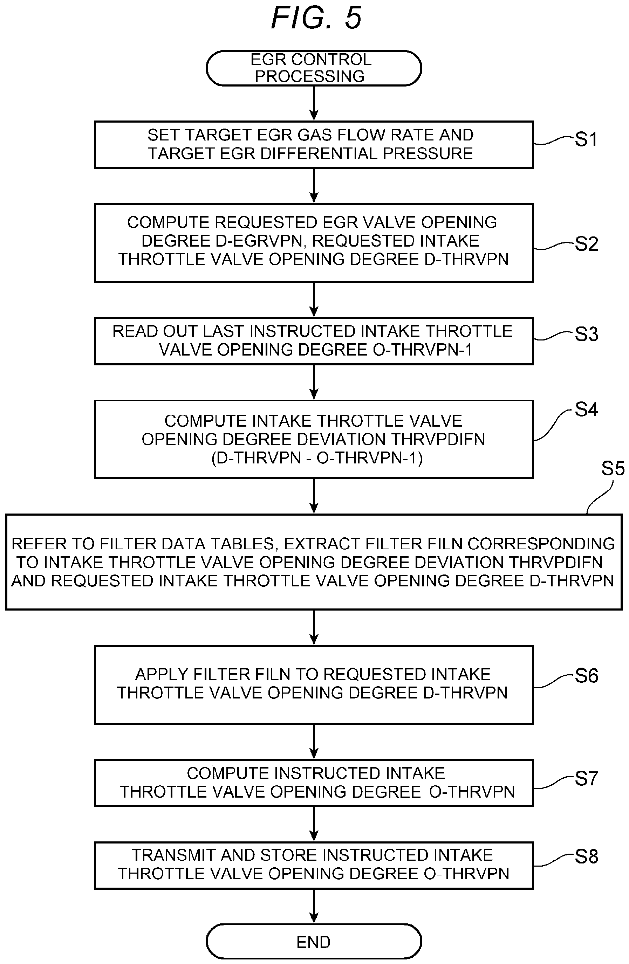

Next, a description will be made on an operation of the EGR controller 1 that has the above configuration. Fig. 5 is a flowchart of an EGR control method for the internal combustion engine according to the embodiment of the invention that is executed by the EGR controller 1. Following EGR control processing is executed in the EGR control method for the internal combustion engine according to the embodiment of the invention. Noted that the EGR controller 1 executes the EGR control processing at specified intervals.

As depicted in Fig. 5, when the EGR control processing is initiated, the target value setting section 2 sets the target EGR gas flow rate and the target EGR differential pressure (step S1). Next, the intake throttle valve opening degree computing section 3 computes the requested intake throttle valve opening degree D-THRVPn of this time (the n time), and the EGR valve opening degree computing section 4 computes the requested EGR valve opening degree D-EGRVPn of this time (step S2). Then, the filter processing section 5 receives the requested intake throttle valve opening degree D-THRVPn that is computed in step S2, and reads out the instructed intake throttle valve opening degree O-THRVPn-1 that is computed in the last filter processing (the n-1 time) and is stored in the memory section 7 (step S3). Next, the intake throttle valve opening degree deviation THRVPDifn that is the difference between the requested intake throttle valve opening degree D-THRVPn of this time that is computed in step S2 and the instructed intake throttle valve opening degree O-THRVPn-1 of the last time that is read out in step S3 ("D-THRVPn" - "O-THRVPn-1") (step S4). Next, the above filter data tables are referred to extract the filter Filn that corresponds to the intake throttle valve opening degree deviation THRVPDifn and the requested intake throttle valve opening degree D-THRVPn that are computed this time (step S5). Then, this extracted filter Filn is applied to the requested intake throttle valve opening degree D-THRVPn (step S6), the instructed intake throttle valve opening degree O-THRVPn is maintained or corrected in accordance with the filter Filn, and the instructed intake throttle valve opening degree O-THRVPn of this time is computed (step S7). Then, this computed instructed intake throttle valve opening degree O-THRVPn is transmitted to the EGR device drive instructing section 6 and is also transmitted to and stored in the memory section 7 (step S8), and the filter processing is terminated.

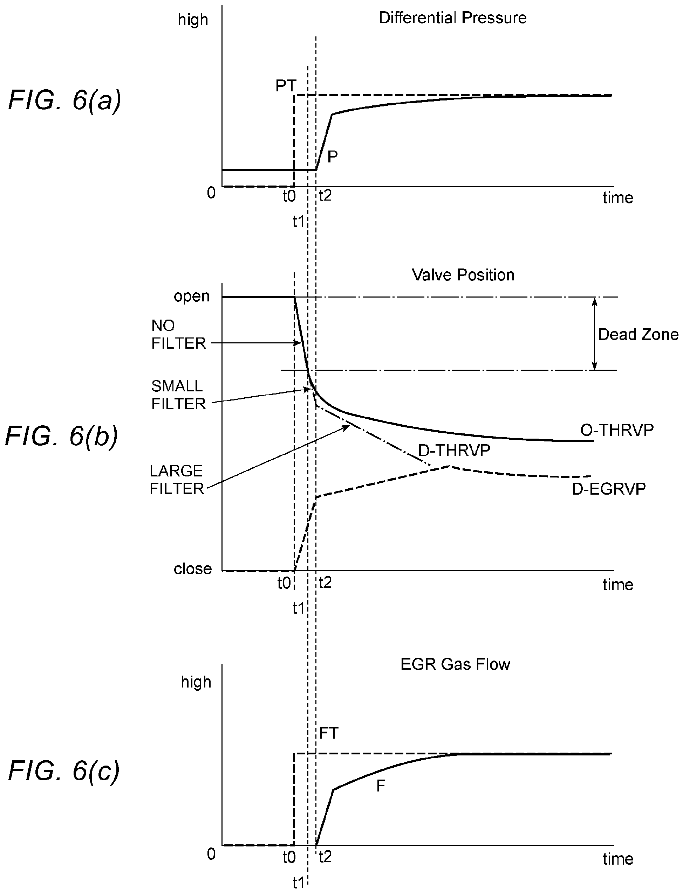

Hereinafter, an operation of the EGR device 20 in the above EGR control processing will specifically be described. Fig. 6 includes graphs for exemplifying the operation of the EGR device 20 in the EGR control processing, in which Fig. 6(a) is a graph that depicts statuses of the target EGR differential pressure and the actual EGR differential pressure, Fig. 6(b) is a graph that depicts statuses of the opening degrees of the EGR valve and the intake throttle valve, and Fig. 6(c) is a graph that depicts statuses of the target EGR gas flow rate and the actual EGR gas flow rate. In this example, the filter depicted in Fig. 3(b) is set.

As depicted in Figs. 6(a) to (c), for example, when the accelerator pedal is operated from a fuel cut state to a low-load state or an intermediate-load state of the internal combustion engine 10, the target EGR differential pressure PT and the target EGR gas flow rate FT are set by the target value setting section 2 at time t0, and the intake throttle valve opening degree computing section 3 and the EGR valve opening degree computing section 4 respectively compute the requested intake throttle valve opening degree D-THRVP and the requested EGR valve opening degree D-EGRVP. Then, the requested intake throttle valve opening degree D-THRVP is computed in the closing direction at a constant change rate until time t2 by passing time t1, at which the requested intake throttle valve opening degree D-THRVP exceeds the dead zone of the intake throttle valve 23. Then, the change rate of the requested intake throttle valve opening degree D-THRVP in the closing direction is reduced at the time t2 and is computed at this change rate in the closing direction thereafter (see Fig. 6(b)). Meanwhile, the requested EGR valve opening degree D-EGRVP is computed in the opening direction at a constant change rate until the time t2, the change ratio thereof in the opening direction is reduced at the time t2, and the requested EGR valve opening degree D-EGRVP is computed at this change rate in the opening direction thereafter (see Fig. 6(b)).

Meanwhile, as depicted in Fig. 6(b), the filter processing section 5 does not apply the filter to the requested intake throttle valve opening degree D-THRVP in a period until the time t1 in which the opening degree of the intake throttle valve 23 is in the dead zone, and closes the intake throttle valve 23 at a requested change rate. Then, when the opening degree of the intake throttle valve 23 exceeds the region of the dead zone at the time t1, the filter processing section 5 applies the filter to the requested intake throttle valve opening degree D-THRVP. Because the change rate of the requested intake throttle valve opening degree D-THRVP remains high until the time t2, it is requested to promptly drive and close the intake throttle valve 23. Accordingly, the small filter (for example, 1) is applied to the requested intake throttle valve opening degree D-THRVP, and the instructed intake throttle valve opening degree O-THRVP, the change rate of which is lower than that of the requested intake throttle valve opening degree D-THRVP, is computed. Then, at the time t2, the change rate of the requested intake throttle valve opening degree D-THRVP is further reduced, the large filter (for example, 2, 3) is applied to the requested intake throttle valve opening degree D-THRVP for the stable EGR gas flow rate control, and the instructed intake throttle valve opening degree O-THRVP, the change rate of which is further reduced, is computed (see Fig. 6(b)) .

As described above, the filters are extracted on the basis of the requested opening degree of the intake throttle valve 23 and the requested change rate of the opening degree of the intake throttle valve 23, and the requested intake throttle valve opening degree D-THRVP is thereby corrected. Thus, as depicted in Figs. 6(a), (c), the EGR gas flow rate and the EGR differential pressure are respectively controlled to be the target EGR gas flow rate and the target EGR differential pressure in a stable and prompt manner, and hunting of the EGR gas flow rate control as in the conventional case (see Figs. 7(a) to (c)) is suppressed.

As described above, according to the EGR controller 1 for the internal combustion engine and the EGR control method for the internal combustion engine according to the embodiment of the invention, the responsiveness of the EGR gas flow rate control can be maintained or improved while the EGR gas flow rate can stably be controlled.

In the EGR controller 20, the intake throttle valve 23 is provided in the intake passageway 12 to generate the EGR differential pressure. However, instead of the intake throttle valve 23, a throttle valve that is in a similar mode to the intake throttle valve 23 may be provided in the exhaust passageway 13. In this case, the throttle valve that is provided in the exhaust passageway 13 is controlled in a similar manner to the intake throttle valve 23 by the EGR controller 1.

Furthermore, the invention may be realized by providing a non-temporary recording medium, in which an EGR control program that allows the EGR controller to execute the EGR control method according to the above-described embodiment of the invention is recorded, in the ECU and causing a processing unit of the ECU to read out and execute the EGR control program that is recorded in the recording medium.

In this case, the EGR control program that is read out from the above non-temporary recording medium realizes the above-described EGR control method according to the embodiment of the invention. Thus, this EGR control program and the non-temporary recording medium, in which this program is recorded, are also one aspect of the invention.

As the non-temporary recording medium that provides this EGR control program, for example, a flexible disc, a hard disc, a magnet-optical disc, an optical disc such as CD-ROM, CD-R, CD-RW, DVD-ROM, DVD-RAM, DVD-RW, and DVD+RW, a magnetic tape, a non-volatile memory card, and a ROM are included. Alternatively, this EGR control program may be downloadable via a communication network.

### [Reference Signs List]

1: EGR controller
2: target value setting section
3: intake throttle valve opening degree computing section
4: EGR valve opening degree computing section
5: filter processing section
6: EGR device drive instructing section
7: memory section
10: internal combustion engine
11: internal combustion engine body
12: intake passageway
13: exhaust passageway
14: air filter
15: intake air amount sensor
16: exhaust gas after-treatment device
17: turbocharger
18: compressor
19: turbine
20: EGR device
21: EGR passageway
20: EGR valve
23: intake throttle valve
24: EGR cooler
25: differential sensor

## Claims

1. An EGR controller (1) for an internal combustion engine (10) for controlling an EGR device (20) provided in the internal combustion engine (10) that includes at least one turbocharger,
1.1 the EGR device (20) having: an EGR passageway (21), one end of which is connected to a downstream side of a turbine of the turbocharger in an exhaust passageway (13), and the other end of which is connected to an upstream side of a compressor (18) of the turbocharger in an intake passageway (12); an EGR valve (20) that can change a flow area of the EGR passageway (21); and an intake throttle valve (23) that is provided on the upstream side of the compressor (18) in the intake passageway (12) and can throttle the intake passageway (12),
1.2 the EGR controller for the internal combustion engine (10) comprising:
1.2.1 a target value setting section (2) for setting a target value of differential pressure between an upstream side and a downstream side of the EGR valve (20) and setting a target value of an EGR gas flow rate that is recirculated via the EGR passageway (21) on the basis of an operation state of the internal combustion engine (10);
1.2.2 an intake throttle valve opening degree computing section (3) for computing an opening degree of the intake throttle valve (23) in accordance with the target value of the differential pressure set by the target value setting section (2) and a detected value of the differential pressure;
1.2.3 an EGR valve opening degree computing section (4) for computing an opening degree of the EGR valve (20) in accordance with the target value of the EGR gas flow rate set by the target value setting section (2) and a detected value of the EGR gas flow rate; and **characterized by**:
1.2.4 a filter processing section (5) for executing filter processing by applying a filter to the opening degree of the intake throttle valve (23) computed by the intake throttle valve opening degree computing section (3), wherein
1.2.5 the filter is a variable filter and is set in accordance with an intake throttle valve opening degree deviation and the requested intake throttle valve opening degree of the intake throttle valve (23), whereby the intake throttle valve opening degree deviation is the difference between the requested intake throttle valve opening degree of the intake throttle valve (23) computed by the intake throttle valve opening degree computing section (3) and the instructed intake throttle valve opening degree that is computed in the last filter processing and
1.2.6 in the filter processing, the filter processing section (5) extracts a filter that corresponds to the intake throttle valve opening degree deviation and the requested intake throttle valve opening degree of the intake throttle valve (23), and maintains or corrects the opening degree of the intake throttle valve (23) computed by the intake throttle valve opening degree computing section (3) by applying the extracted filter thereto.

2. The EGR controller for the internal combustion engine according to claim 1, wherein each of the filters represents a time constant, each of which is set in accordance with the intake throttle valve opening degree deviation and the requested intake throttle valve opening degree of the intake throttle valve (23), and
the filter processing section makes a correction to reduce the opening degree of the intake throttle valve computed by the intake throttle valve opening degree computing section (3) in accordance with the time constant of the extracted filter.

3. The EGR controller for the internal combustion engine according to claim 1 or 2, wherein the filter processing section maintains the opening degree of the intake throttle valve computed by the intake throttle valve opening degree computing section in a dead zone of the intake throttle valve.

4. The EGR controller for the internal combustion engine according to any one of claims 1 to 3, wherein the filter processing section maintains the opening degree of the intake throttle valve computed by the intake throttle valve opening degree computing section when the intake throttle valve is driven in an opening direction.

5. The EGR controller for the internal combustion engine according to any one of claims 1 to 4 further comprising an EGR device drive instructing section for driving and controlling the EGR valve at the opening degree of the EGR valve computed by the EGR valve opening degree computing section and driving and controlling the intake throttle valve at the opening degree of the intake throttle valve subjected to the filter processing by the filter processing section.

6. An EGR control method for an internal combustion engine for controlling an EGR device provided in the internal combustion engine that includes at least one turbocharger, the EGR device having: an EGR passageway, one end of which is connected to a downstream side of a turbine of the turbocharger in an exhaust passageway, and the other end of which is connected to an upstream side of a compressor of the turbocharger in an intake passageway; an EGR valve that can change a flow area of the EGR passageway; and an intake throttle valve that is provided on the upstream side of the compressor in the intake passageway and can throttle the intake passageway, the EGR control method for the internal combustion engine comprising:
a target value setting step in which a target value of differential pressure between an upstream side and a downstream side of the EGR valve is set and a target value of an EGR gas flow rate that is recirculated via the EGR passage is set on the basis of an operation state of the internal combustion engine;
an intake throttle valve opening degree computing step in which an opening degree of the intake throttle valve is computed in accordance with the target value of the differential pressure set in the target value setting step and a detected value of the differential pressure;
an EGR valve opening degree computing step in which an opening degree of the EGR valve is computed in accordance with the target value of the EGR gas flow rate set in the target value setting step and a detected value of the EGR gas flow rate; and **characterized by**:
a filter processing step in which filter processing is executed by applying a filter to the opening degree of the intake throttle valve computed in the intake throttle valve opening degree computing step, wherein
the filter is a variable filter and is set in accordance with an intake throttle valve opening degree deviation and the requested intake throttle valve opening degree of the intake throttle valve (23), whereby the intake throttle valve opening degree deviation is the difference between the requested intake throttle valve opening degree of the intake throttle valve (23) computed by the intake throttle valve opening degree computing step (3) and the instructed intake throttle valve opening degree that is computed in the last filter processing, and
in the filter processing, the filter processing section (5) extracts a filter that corresponds to the intake throttle valve opening degree deviation and the requested intake throttle valve opening degree of the intake throttle valve (23), and maintains or corrects the opening degree of the intake throttle valve (23) computed by the intake throttle valve opening degree computing step (3) by applying the extracted filter thereto.

7. The EGR control method for the internal combustion engine according to claim 6, wherein each of the filters represents a time constant, each of which is set in accordance with the intake throttle valve opening degree deviation and the requested intake throttle valve opening degree of the intake throttle valve (23), and
in the filter processing step, a correction is made to reduce the opening degree of the intake throttle valve computed in the intake throttle valve opening degree computing step in accordance with the time constant of the extracted filter.

8. The EGR control method for the internal combustion engine according to claim 6 or 7, wherein, in the filter processing step, the opening degree of the intake throttle valve computed in the intake throttle valve opening degree computing step is maintained in a dead zone of the intake throttle valve.

9. The EGR control method for the internal combustion engine according to any one of claims 6 to 8, wherein, in the filter processing step, the opening degree of the intake throttle valve computed in the intake throttle valve opening degree computing step is maintained when the intake throttle valve is driven in an opening direction.

10. The EGR control method for the internal combustion engine according to any one of claims 6 to 9 further comprising an EGR device drive instructing step in which the EGR valve is driven and controlled at the opening degree of the EGR value computed in the EGR valve opening degree computing step and the intake throttle valve is driven and controlled at the opening degree of the intake throttle valve subjected to the filter processing in the filter processing step.

## Patentansprüche

1. AGR-Steuerung (1) für einen Verbrennungsmotor (10) zum Steuern einer AGR-Vorrichtung (20), die in dem Verbrennungsmotor (10) vorgesehen ist, der wenigstens einen Turbolader umfasst,
1.1 wobei die AGR-Vorrichtung (20) Folgendes umfasst: einen AGR-Kanal (21), dessen eines Ende mit einer stromabwärts gelegenen Seite einer Turbine des Turboladers in einem Auslasskanal (13) verbunden ist und dessen anderes Ende mit einer stromaufwärts gelegenen Seite eines Verdichters (18) des Turboladers in einem Einlasskanal (12) verbunden ist, ein AGR-Ventil (20), das einen Strömungsquerschnitt des AGR-Kanals (21) ändern kann, und ein Einlassdrosselventil (23), das auf der stromaufwärts gelegenen Seite des Verdichters (18) in dem Einlasskanal (12) vorgesehen ist und den Einlasskanal (12) drosseln kann,
1.2 wobei die AGR-Steuerung für den Verbrennungsmotor (10) Folgendes umfasst:
1.2.1 einen Sollwerteinstellabschnitt (2) zum Einstellen eines Sollwerts eines Differenzdrucks zwischen einer stromaufwärts gelegenen Seite und einer stromabwärts gelegenen Seite des AGR-Ventils (20) und zum Einstellen eines Sollwerts einer AGR-Gasdurchflussmenge, die auf Grundlage eines Betriebszustands des Verbrennungsmotors (10) über den AGR-Durchgang (21) zirkuliert wird,
1.2.2 einen Einlassdrosselventilöffnungsgradberechnungsabschnitt (3) zum Berechnen eines Öffnungsgrads des Einlassdrosselventils (23) gemäß dem durch den Sollwerteinstellabschnitt (2) eingestellten Sollwert des Differenzdrucks und einem erfassten Wert des Differenzdrucks,
1.2.3 einen AGR-Ventilöffnungsgradberechnungsabschnitt (4) zum Berechnen eines Öffnungsgrads des AGR-Ventils (20) gemäß der durch den Sollwerteinstellabschnitt (2) eingestellten AGR-Gasdurchflussmenge und einem erfassten Wert der AGR-Gasdurchflussmenge, und **gekennzeichnet durch**:
1.2.4 einen Filterverarbeitungsabschnitt (5) zum Durchführen einer Filterverarbeitung durch Anlegen eines Filters an den Öffnungsgrad des Einlassdrosselventils (23), der durch den Einlassdrosselventilöffnungsgradberechnungsabschnitt (3) berechnet worden ist, wobei
1.2.5 der Filter ein variabler Filter ist und gemäß einer Abweichung des Öffnungsgrads des Einlassdrosselventils und dem geforderten Einlassdrosselventilöffnungsgrad des Einlassdrosselventils (23) eingestellt wird, wobei die Abweichung des Öffnungsgrads des Einlassdrosselventils die Differenz zwischen dem geforderten Einlassdrosselventilöffnungsgrad des Einlassdrosselventils (23), der durch den Einlassdrosselventilöffnungsgradberechnungsabschnitt (3) berechnet worden ist, und dem angewiesenen Einlassdrosselventilöffnungsgrad, der bei der letzten Filterverarbeitung berechnet wird, ist, und
1.2.6 bei der Filterverarbeitung der Filterverarbeitungsabschnitt (5) einen Filter entfernt, der der Abweichung des Öffnungsgrads des Einlassdrosselventils und dem geforderten Einlassdrosselventilöffnungsgrad des Einlassdrosselventils (23) entspricht, und den Öffnungsgrad des Einlassdrosselventils (23), der durch den Einlassdrosselventilöffnungsgradberechnungsabschnitt (3) berechnet worden ist, durch Anlegen des entfernten Filters an demselben aufrechterhält oder korrigiert.

2. AGR-Steuerung für den Verbrennungsmotor nach Anspruch 1, wobei jeder der Filter eine Zeitkonstante darstellt, die jeweils gemäß der Abweichung des Öffnungsgrads des Einlassdrosselventils und dem geforderten Einlassdrosselventilöffnungsgrad des Einlassdrosselventils (23) eingestellt wird, und
der Filterverarbeitungsabschnitt eine Korrektur vornimmt, um den Öffnungsgrad des Einlassdrosselventils, der durch den Einlassdrosselventilöffnungsgradberechnungsabschnitt (3) berechnet worden ist, gemäß der Zeitkonstante des entfernten Filters zu reduzieren.

3. AGR-Steuerung für den Verbrennungsmotor nach Anspruch 1 oder 2, wobei der Filterverarbeitungsabschnitt den Öffnungsgrad des Einlassdrosselventils, der durch den Einlassdrosselventilöffnungsgradberechnungsabschnitt berechnet worden ist, in einem Totbereich des Einlassdrosselventils aufrechterhält.

4. AGR-Steuerung für den Verbrennungsmotor nach einem der Ansprüche 1 bis 3, wobei der Filterverarbeitungsabschnitt den Öffnungsgrad des Einlassdrosselventils, der durch den Einlassdrosselventilöffnungsgradberechnungsabschnitt berechnet worden ist, aufrechterhält, wenn das Einlassdrosselventil in eine Öffnungsrichtung gelenkt wird.

5. AGR-Steuerung für den Verbrennungsmotor nach einem der Ansprüche 1 bis 4, ferner umfassend einen AGR-Vorrichtungsantriebsanweisungsabschnitt zum Lenken und Steuerung des AGR-Ventils bei dem Öffnungsgrad des AGR-Ventils, der durch den AGR-Ventilöffnungsgradberechnungsabschnitt berechnet worden ist, und zum Lenken und Steuern des Einlassdrosselventils bei dem Öffnungsgrad des Einlassdrosselventils, der der Filterverarbeitung durch den Filterverarbeitungsabschnitt unterzogen worden ist.

6. Verfahren zur AGR-Steuerung eines Verbrennungsmotors zum Steuern einer AGR-Vorrichtung, die in dem Verbrennungsmotor vorgesehen ist, der wenigstens einen Turbolader umfasst, wobei die AGR-Vorrichtung Folgendes aufweist: einen AGR-Kanal, dessen eines Ende mit einer stromabwärts gelegenen Seite einer Turbine des Turboladers in einem Auslasskanal verbunden ist und dessen anderes Ende mit einer stromaufwärts gelegenen Seite eines Verdichters des Turboladers in einem Einlasskanal verbunden ist, ein AGR-Ventil, das einen Strömungsquerschnitt des AGR-Kanals ändern kann, und ein Einlassdrosselventil, das auf der stromaufwärts gelegenen Seite des Verdichters in dem Einlasskanal vorgesehen ist und den Einlasskanal drosseln kann, wobei das Verfahren zur AGR-Steuerung des Verbrennungsmotors Folgendes umfasst:
einen Sollwerteinstellschritt, in dem ein Sollwert eines Differenzdrucks zwischen einer stromaufwärts gelegenen Seite und einer stromabwärts gelegenen Seite des AGR-Ventils eingestellt wird und ein Sollwert einer AGR-Gasdurchflussmenge, die über den AGR-Kanal zirkuliert wird, auf Grundlage eines Betriebszustands des Verbrennungsmotors eingestellt wird,
einen Einlassdrosselventilöffnungsgradberechnungsschritt, in dem ein Öffnungsgrad des Einlassdrosselventils gemäß dem in dem Sollwerteinstellschritt eingestellten Sollwert des Differenzdrucks und einem erfassten Wert des Differenzdrucks berechnet wird,
einen AGR-Ventilöffnungsgradberechnungsschritt, in dem ein Öffnungsgrad des AGR-Ventils gemäß dem in dem Sollwerteinstellschritt eingestellten Sollwert der AGR-Gasdurchflussmenge und einem erfassten Wert der AGR-Gasdurchflussmenge berechnet wird, und **gekennzeichnet durch**:
einen Filterverarbeitungsschritt, in dem eine Filterverarbeitung durch Anlegen eines Filters an den Öffnungsgrad des Einlassdrosselventils, der in dem Einlassdrosselventilöffnungsgradberechnungsschritt berechnet worden ist, durchgeführt wird, wobei
der Filter ein variabler Filter ist und gemäß einer Abweichung des Öffnungsgrads des Einlassdrosselventils und dem geforderten Einlassdrosselventilöffnungsgrad des Einlassdrosselventils (23) eingestellt wird, wobei die Abweichung des Öffnungsgrads des Einlassdrosselventils die Differenz zwischen dem geforderten Einlassdrosselventilöffnungsgrad des Einlassdrosselventils (23), der in dem Einlassdrosselventilöffnungsgradberechnungsschritt (3) berechnet worden ist, und dem angewiesenen Einlassdrosselventilöffnungsgrad, der bei der letzten Filterverarbeitung berechnet wird, ist, und
bei der Filterverarbeitung der Filterverarbeitungsabschnitt (5) einen Filter entfernt, der der Abweichung des Öffnungsgrads des Einlassdrosselventils und dem geforderten Einlassdrosselventilöffnungsgrad des Einlassdrosselventils (23) entspricht, und den Öffnungsgrad des Einlassdrosselventils (23), der in dem Einlassdrosselventilöffnungsgradberechnungsschritt (3) berechnet worden ist, durch Anlegen des entfernten Filters an denselben aufrechterhält oder korrigiert.

7. Verfahren zur AGR-Steuerung des Verbrennungsmotors nach Anspruch 6, wobei jeder der Filter eine Zeitkonstante darstellt, die jeweils gemäß der Abweichung des Öffnungsgrads des Einlassdrosselventils und dem geforderten Einlassdrosselventilöffnungsgrad des Einlassdrosselventils (23) eingestellt wird, und
in dem Filterverarbeitungsschritt eine Korrektur vorgenommen wird, um den Öffnungsgrad des Einlassdrosselventils, der in dem Einlassdrosselventilöffnungsgradberechnungsschritt berechnet worden ist, gemäß der Zeitkonstante des entfernten Filters zu reduzieren.

8. Verfahren zur AGR-Steuerung des Verbrennungsmotors nach Anspruch 6 oder 7, wobei in dem Filterverarbeitungsschritt der Öffnungsgrad des Einlassdrosselventils, der in dem Einlassdrosselventilöffnungsgradberechnungsschritt berechnet worden ist, in einem Totbereich des Einlassdrosselventils aufrechterhalten wird.

9. Verfahren zur AGR-Steuerung des Verbrennungsmotors nach einem der Ansprüche 6 bis 8, wobei in dem Filterverarbeitungsschritt der Öffnungsgrad des Einlassdrosselventils, der in dem Einlassdrosselventilöffnungsgradberechnungsschritt berechnet worden ist, aufrechterhalten wird, wenn das Einlassdrosselventil in eine Öffnungsrichtung gelenkt wird.

10. Verfahren zur AGR-Steuerung des Verbrennungsmotors nach einem der Ansprüche 6 bis 9, ferner umfassend einen AGR-Vorrichtungsantriebsanweisungsschritt, in dem das AGR-Ventil bei dem Öffnungsgrad des EGR-Werts, der in dem AGR-Ventilöffnungsgradberechnungsschritt worden ist, gelenkt und gesteuert wird, und das Einlassdrosselventil bei dem Öffnungsgrad des Einlassdrosselventils, das der Filterverarbeitung in dem Filterverarbeitungsschritt unterzogen worden ist, gelenkt und gesteuert wird.

## Revendications

1. Contrôleur EGR (1) pour un moteur à combustion interne (10) pour contrôler un dispositif EGR (20) prévu dans le moteur à combustion interne (10), qui comporte au moins un turbocompresseur,
1.1 le dispositif EGR (20) présentant : un passage EGR (21), dont une extrémité est connectée à un côté aval d'une turbine du turbocompresseur dans un passage d'échappement (13) et l'autre extrémité est connectée à un côté amont d'un compresseur (18) du turbocompresseur dans un passage d'admission (12) ; une vanne EGR (20) qui peut modifier une section d'écoulement du passage EGR (21) ; et un papillon d'admission (23) qui est prévu sur le côté amont du compresseur (18) dans le passage d'admission (12) et qui peut étrangler le passage d'admission (12),
1.2 le contrôleur EGR pour le moteur à combustion interne (10) comprenant :
1.2.1 une section de réglage de valeur cible (2) pour régler une valeur cible de pression différentielle entre un côté amont et un côté aval de la vanne EGR (20) et pour régler une valeur cible d'un débit de gaz EGR qui est recirculé par le biais du passage EGR (21) sur la base d'un état de fonctionnement du moteur à combustion interne (10) ;
1.2.2 une section de calcul (3) du degré d'ouverture du papillon d'admission pour calculer un degré d'ouverture du papillon d'admission (23) en fonction de la valeur cible de la pression différentielle réglée par la section de réglage de valeur cible (2) et d'une valeur détectée de la pression différentielle ;
1.2.3 une section de calcul (4) du degré d'ouverture de la vanne EGR pour calculer un degré d'ouverture de la vanne EGR (20) en fonction de la valeur cible du débit de gaz EGR réglé par la section de réglage de valeur cible (2) et d'une valeur détectée du débit de gaz EGR ; et **caractérisé par** :
1.2.4 une section de traitement de filtre (5) pour exécuter un traitement de filtre en appliquant un filtre au degré d'ouverture du papillon d'admission (23), calculé par la section de calcul (3) du degré d'ouverture du papillon d'admission,
1.2.5 le filtre étant un filtre variable et étant réglé en fonction d'un écart du degré d'ouverture du papillon d'admission et du degré d'ouverture de papillon d'admission demandé du papillon d'admission (23), l'écart du degré d'ouverture du papillon d'admission étant la différence entre le degré d'ouverture de papillon d'admission demandé du papillon d'admission (23) calculé par la section de calcul (3) du degré d'ouverture du papillon d'admission et le degré d'ouverture du papillon d'admission requis qui a été calculé au cours du dernier traitement de filtre et
1.2.6 dans le traitement de filtre, la section de traitement de filtre (5) extrayant un filtre qui correspond à l'écart de degré d'ouverture de papillon d'admission et au degré d'ouverture de papillon d'admission demandé du papillon d'admission (23), et maintenant ou corrigeant le degré d'ouverture du papillon d'admission (23) calculé par la section de calcul (3) du degré d'ouverture du papillon d'admission en appliquant à celui-ci le filtre extrait.

2. Contrôleur EGR pour un moteur à combustion interne selon la revendication 1, dans lequel chacun des filtres représente une constante de temps, chacune étant réglée en fonction de l'écart de degré d'ouverture de papillon d'admission et du degré d'ouverture de papillon d'admission demandé du papillon d'admission (23), et
la section de traitement de filtre effectue une correction pour réduire le degré d'ouverture du papillon d'admission calculé par la section de calcul (3) du degré d'ouverture du papillon d'admission en fonction de la constante de temps du filtre extrait.

3. Contrôleur EGR pour un moteur à combustion interne selon la revendication 1 ou 2, dans lequel la section de traitement de filtre maintient le degré d'ouverture du papillon d'admission calculé par la section de calcul du degré d'ouverture du papillon d'admission dans une zone morte du papillon d'admission.

4. Contrôleur EGR pour un moteur à combustion interne selon l'une quelconque des revendications 1 à 3, dans lequel la section de traitement de filtre maintient le degré d'ouverture du papillon d'admission calculé par la section de calcul du degré d'ouverture du papillon d'admission lorsque le papillon d'admission est entraîné dans une direction d'ouverture.

5. Contrôleur EGR pour un moteur à combustion interne selon l'une quelconque des revendications 1 à 4, comprenant en outre une section d'instruction d'entraînement du dispositif EGR pour entraîner et contrôler la vanne EGR au degré d'ouverture de la vanne EGR calculé par la section de calcul du degré d'ouverture de la vanne EGR et pour entraîner et contrôler le papillon d'admission au degré d'ouverture du papillon d'admission soumis au traitement de filtre par la section de traitement de filtre.

6. Procédé de contrôle d'EGR pour un moteur à combustion interne pour contrôler un dispositif EGR prévu dans un moteur à combustion interne qui comporte au moins un turbocompresseur, le dispositif EGR ayant : un passage EGR, dont une extrémité est connectée à un côté aval d'une turbine du turbocompresseur dans un passage d'échappement, et dont l'autre extrémité est connectée à un côté amont d'un compresseur du turbocompresseur dans un passage d'admission ; une vanne EGR qui peut faire varier une section d'écoulement du passage EGR ; et un papillon d'admission qui est prévu du côté amont du compresseur dans le passage d'admission et qui peut étrangler le passage d'admission, le procédé de commande d'EGR pour le moteur à combustion interne comprenant :
une étape de réglage de valeurs cible dans laquelle une valeur cible de la pression différentielle entre un côté amont et un côté aval de la vanne EGR est réglée et une valeur cible d'un débit de gaz EGR qui est recirculé par le biais du passage EGR est réglée sur la base d'un état de fonctionnement du moteur à combustion interne ;
une étape de calcul du degré d'ouverture de papillon d'admission dans laquelle un degré d'ouverture du papillon d'admission est calculé en fonction de la valeur cible de la pression différentielle réglée dans l'étape de réglage de valeurs cible et d'une valeur détectée de la pression différentielle ;
une étape de calcul du degré d'ouverture de vanne EGR dans laquelle un degré d'ouverture de la vanne EGR est calculé en fonction de la valeur cible du débit de gaz EGR réglé dans l'étape de réglage de valeurs cible et d'une valeur détectée du débit de gaz EGR ; et **caractérisé par** :
une étape de traitement de filtre dans laquelle un traitement de filtre est exécuté en appliquant un filtre au degré d'ouverture du papillon d'admission calculé dans l'étape de calcul du degré d'ouverture du papillon d'admission, le filtre étant un filtre variable et étant réglé en fonction d'un écart du degré d'ouverture du papillon d'admission et du degré d'ouverture du papillon d'admission demandé du papillon d'admission (23), l'écart de degré d'ouverture du papillon d'admission étant la différence entre le degré d'ouverture de papillon d'admission demandé du papillon d'admission (23) calculé par l'étape de calcul (3) du degré d'ouverture du papillon d'admission et le degré d'ouverture du papillon d'admission demandé qui est calculé dans le dernier traitement de filtre, et
dans le traitement de filtre, la section de traitement de filtre (5) extrait un filtre qui correspond à l'écart du degré d'ouverture de papillon d'admission et le degré d'ouverture de papillon d'admission demandé du papillon d'admission (23), et maintient ou corrige le degré d'ouverture du papillon d'admission (23) calculé par l'étape de calcul (3) du degré d'ouverture du papillon d'admission en appliquant à celle-ci le filtre extrait.

7. Procédé de contrôle d'EGR pour un moteur à combustion interne selon la revendication 6, dans lequel chacun des filtres représente une constante de temps, chacune étant réglée en fonction de l'écart de degré d'ouverture du papillon d'admission et du degré d'ouverture de papillon d'admission demandé du papillon d'admission (23), et
dans l'étape de traitement de filtre, une correction est effectuée pour réduire le degré d'ouverture du papillon d'admission calculé dans l'étape de calcul du degré d'ouverture du papillon d'admission en fonction de la constante de temps du filtre extrait.

8. Procédé de contrôle d'EGR pour un moteur à combustion interne selon la revendication 6 ou 7, dans lequel, dans l'étape de traitement de filtre, le degré d'ouverture du papillon d'admission calculé dans l'étape de calcul du degré d'ouverture du papillon d'admission est maintenu dans une zone morte du papillon d'admission.

9. Procédé de contrôle d'EGR pour un moteur à combustion interne selon l'une quelconque des revendications 6 à 8, dans lequel, dans l'étape de traitement de filtre, le degré d'ouverture du papillon d'admission calculé dans l'étape de calcul du degré d'ouverture du papillon d'admission est maintenu lorsque le papillon d'admission est entraîné dans une direction d'ouverture.

10. Procédé de contrôle d'EGR pour un moteur à combustion interne selon l'une quelconque des revendications 6 à 9, comprenant en outre une étape d'instruction d'entraînement du dispositif EGR dans laquelle la vanne EGR est entraînée et contrôlée au degré d'ouverture de la valeur EGR calculée dans l'étape de calcul du degré d'ouverture de la vanne EGR et le papillon d'admission est entraîné et contrôlé au degré d'ouverture du papillon d'admission soumis au traitement de filtre dans l'état de traitement de filtre.
